## Europäisches Patentamt

(19) **European Patent Office**

**Office européen des brevets**

(11) Publication number: **0 102 702**

**B1**

(12) **EUROPEAN PATENT SPECIFICATION**

(45) Date of publication of patent specification: **29.07.87**

(51) Int. Cl.⁴: **A 01 N 63/00**

(21) Application number: **83303800.3**

(22) Date of filing: **30.06.83**

(54) **Methods and compositions of combating pests.**

(30) Priority: **22.07.82 GB 8221178**
**26.10.82 GB 8230573**
**04.02.83 GB 8303050**

(43) Date of publication of application:
**14.03.84 Bulletin 84/11**

(45) Publication of the grant of the patent:
**29.07.87 Bulletin 87/31**

(84) Designated Contracting States:
**AT BE CH DE FR GB IT LI NL SE**

(56) References cited:
**FR-A-2 187 778**
**GB-A-2 065 128**
**US-A-4 310 519**

**THE PESTICIDE MANUAL, 6th edition, 1979,**
**page 26, BCPC Publications, Croydon, GB**

(73) Proprietor: **IMPERIAL CHEMICAL INDUSTRIES PLC**
**Imperial Chemical House Millbank**
**London SW1P 3JF (GB)**

(72) Inventor: **Poole, Nigel John**
**24 Perryhill Drive, Little Sandhurst**
**Camberley, Surrey (GB)**
Inventor: **Holden, James Stuart**
**12 Rances Lane**
**Wokingham, Berkshire (GB)**

(74) Representative: **Bishop, Nigel Douglas et al**
**Imperial Chemical Industries PLC Legal**
**Department: Patents PO Box 6 Bessemer Road**
**Welwyn Garden City Herts, AL7 1HD (GB)**

Courier Press, Leamington Spa, England.

# 0 102 702

## Description

This invention relates to compositions and methods for the control of insect, nematode and acarine pests particularly those which parasitise growing plants.

It is known from FR—A—2187778, GB—A—1390336 and US—A—4310519 that certain *Streptomyces* spp. can be cultured under appropriate conditions to produce antibiotic substances which after extraction and purification can be employed to combat pests of plants and animals.

We have discovered that insect acarine and nematode pests of plants can be controlled by the application to the foliage of the plants or to the locus of the plants (including the soil) of a culture of certain streptomycetes.

The culture may be a living culture, a dead culture or a culture of reduced viability, for example, one wherein vegetative cells are dead but spores remain viable.

This invention provides a method of controlling insect, acarine or nematode pests of plants which comprises applying to the pests or to the locus of the pests an insecticidally and acaricidally effective amount of a composition comprising a culture of a microorganism of the genus *Streptomyces* characterised in that the species and strain of *Streptomyces* is selected from those species and strains which when cultured under appropriate conditions are capable of producing an insecticidally, acaricidally and nematicidally active C—076 or B-41 type macrocyclic antibiotic substance. In particular it provides a method of controlling insect acarine and nematode pests of plants which comprises applying to the pests or the foliage of plants or to soil in which the plants have been or are to be planted a culture as defined above. Additionally the invention provides compositions suitable for use as insecticides, acaricides or nematicides in the method of the invention.

The method uses a strain of *Streptomyces* species chosen from those capable of producing a C-076 or B-41 type macrocyclic antibiotic substance. A description of C-076 type macrocyclic antibiotic substances, also known as avermectins, is given, for example, in US patent 4,199,569. A description of B-41 type macrocyclic antibiotic substances, also known as milbemycins, is given, for example, in US patent 3,984,564.

A particularly useful C-076 producing *Streptomyces* species is that known as *Streptomyces avermitilis* a culture of which has been deposited in the permanent culture collection of the Fermentation Section of the Northern Utilization Research Branch, US, Department of Agriculture at Peoria, Illinois, USA and has been assigned the accession number NRRL 8165. A further sample of this culture has been deposited, without restriction as to availability, in the permanent culture collection of the American Type Culture Collection at 12301 Parklawn Drive, Rockville, Maryland 20852, USA, and has been assigned the accession number ATCC 31267. Another sample has been deposited in the permanent culture collection of the National Collection of Industrial and Marine Bacteria at 135 Abbey Road, Aberdeen, Scotland and has been assigned the number NCIB 11875. Other strains and mutants of *S. avermitilis* may also be used in this invention process, including, for example, those deposited at the American Type Culture Collection under the accession numbers ATCC 31271 and 31272.

A particularly useful B-41 producing *Streptomyces* species is that known as the B-41-146 strain (fully described in US patent 3,984,564) which has been deposited at the Research Institute of Industrial Technology of Micro-organisms, Agency of Industrial Science and Technology of Japan, under the deposition number Bikokenkinki No. 1438, and at the Northern Research Laboratory, US Department of Agriculture, Peoria, Illinois, USA under the deposit number NRRL 5739. A further sample has been deposited in the National Collection of Industrial and Marine Bacteria, 135 Abbey Road, Aberdeen, Scotland and has been assigned the number NCIB 11876.

Other useful *Streptomyces* species and strains which can be used in the invention include two *Streptomyces* species referred to herein by ICI references A1001 and A1002 samples of which have been deposited in the permanent culture collection of the National Collection of Industrial and Marine Bacteria at 135 Abbey Raod, Aberdeen, Scotland, and have been assigned the numbers NCIB 11877 and NCIB 11878 respectively.

The Streptomycetes may be cultured according to the methods set forth in US patents Nos. 3,984,564 and 4,199,569, and in the Examples hereinafter. Following cultivation of the organism the cells are separated from broth e.g by centrifugation, filtration, or flocculation (using for example the method set out in GB—A—1381306) and collected for use in the method of the invention. Prior to formulation of the cells they may be subjected to freeze drying, spray drying or to sonication or tyndallisation (pasteurisation) to kill the cells and/or the spores. Tyndallisation may be carried out on the broth prior to the separation of the cells. A typical procedure is to heat the broth to an elevated temperature in the range 50—100°C for a short period, or more than one period with cooling in between. Thus effective tyndallisation can be achieved by heating the broth to 65°C for 30 minutes on three successive days after cultivation of the broth has been completed. Tyndallisation appears to give a product of greater insecticidal potency compared with the untyndallised culture.

Because of the high level of activity of the culture and for greater ease of handling, storage and application it is preferable to formulate the culture into compositions which include inert carriers or diluents, and, preferably, surface active agents and, optionally, other ingredients to assist the product to adhere to plant surfaces, improve rainfastness, or to resist degradation by, for example, sunlight. Such

2

compositions may be applied by conventional application techniques, for example by dusting or spraying the plants or by treating the soil in which the plants are growing or are to be planted. Seeds may be treated with the compositions prior to planting or seedlings may be dipped in the compositions at the time of transplanting.

The invention thus also provides compositions for use in the method of this invention in which the culture is incorporated in a liquid, or paste or jelly-like medium, or is admixed with an inert solid granular or particulate carrier. For application, for example to the foliage of plants, formulations in the form of wettable powders and aqueous suspensions designed to be diluted with water before spraying are particularly preferred. Such formulations may be prepared in a similar way to known formulations of the insecticidal bacterium *Bacillus thuringiensis*.

The compositions may also incorporate emulsifying agents, suspending agents, and also where viable cultures are used, nutrients to sustain the viability of the micro-organisms.

In a further aspect the invention provides a method of combating pests by applying to the pests, to soil or to plants liable to infestation with the pests a pest combating amount of a culture of a *Streptomycete* as defined above which has been freeze dried, spray dried, or sonicated or tyndallised. The invention also provides a process of preparing a composition for use in this method in which either (a) the culture is collected from the cultivation medium and subjected to freeze drying or spray drying and thereafter admixed with a liquid or solid diluent or carrier, or (b) the culture is collected from the cultivation medium and dispersed in a liquid phase and subjected to sonication and optionally thereafter admixed with further diluent or carriers, or (c) the culture in the cultivation medium is subjected to tyndallisation prior to collection and thereafter admixed with a liquid or solid diluent or carrier. The diluents or carriers referred to herein may be materials which are conventionally used for the formulation of pesticides.

The method of the invention may be widely practised on crops liable to infestation by insect and acarine pests, such as for example, vegetable crops such as potatoes and tomatoes, citrus crops, tobacco, bananas, soya and the like, and cereals such as rice, wheat, corn, maize, barley, etc, and cotton.

The compositions of the invention are very toxic to wide varieties of insect and other invertebrate pests of plants including, for example, the following:—

*Aphis fabae* (aphids)
*Megoura viceae* (aphids)
*Dysdercus fasciatus* (capsids)
*Pieris brassicae* (white butterfly, larvae)
*Plutella xylostella* (diamond back moth, larvae)
*Phaedon chochleariae* (mustard beetle)
*Tetranychus urticae* (red spider mites)
*Telarius cinnabarinus* (carmine spider mite)
*Aonidiella* spp. (scale insects)
*Trialeuroides* spp. (white flies)
*Musca domestica* (houseflies)
*Spodoptera littoralis* (cotton leaf worm)

Pests which inhibit the soil, eg. nematodes, rootworms, cutworms, and the like, may also be combated by the use of the method and compositions of the invention. Solid granular compositions are particularly useful in the case of rootworms and cutworms, eg. *Diabrotica* spp. and *Agrotis* spp.

Species of nematodes which may be controlled by the invention method include the following:

*Globodera rostochiensis* (potato cyst nematode)
*Heterodera schachtii* (beet cyst nematode)
*Meloidogyne incognita* (root knot nematode)
*Meloidogyne javanica* (tobacco root knot nematode)
*Pratylenchus penetrans* (lesion nematode)
*Radopholus similis* (burrowing nematode)
*Tylenchulus simipenetrans* (citrus nematode)

A preferred method is to treat the seeds of plants susceptible to nematode parasitisation with a composition incorporating the culture prior to sowing the seeds.

One way of doing this is to prepare a culture of the micro-organism and to incorporate it into paste or a jelly-like composition in which the seeds can be suspended. The composition including the seeds suspended therein can then be injected into or otherwise placed in soil in which the plants are to grow. (The term 'soil' is used herein as a convenient designation embracing natural soils and also composts and other growth media, including wholly artificial growth media in which plants are intended to be grown).

Other methods of application may also be used, for example, placement of compositions incorporating the culture in this soil adjacent to already growing plants, or treating the roots of plants, especially seedlings, at the time of transplantation. Such methods are well known in connection with chemical treatments for nematode control and may be used equally well for treatments according to the method of this invention.

However, one method of treatment which may be used successfully with the compositions of this invention which is not applicable to chemical treatments for nematode control is to apply the compositions to the aerially exposed foliar parts of the plants using, for example, a wettable powder or aqueous

# 0 102 702

suspension type of formulation. Surprisingly, such treatment results in nematode control in and around the roots of the plants so treated.

The various aspects of the invention are illustrated by the following Examples.

## Example 1
### Preparation of a viable culture of *Streptomyces avermitilis*

Tyrosine agar plates were prepared from a composition obtained by mixing the following ingredients in the proportions stated and adjusting the pH to a value within the range 7.2 to 7.4.

| | |
|---|---|
| Glycerol | 15.0 g |
| L-tyrosine | 0.5 g |
| L-asparagine | 1.0 g |
| $K_2HPO_4$ (anhydrous) | 0.5 g |
| $MgSO_4 \cdot 7H_2O$ | 0.5 g |
| NaCl | 0.5 g |
| $FeSO_4 \cdot 7H_2O$ | 0.01 g |
| Trace salts solution* | 1.0 ml |
| Bacto-Agar | 20.0 g |
| Distilled water | 1000 ml |

*The trace salts solution was obtained by dissolving 0.1 g of each of $FeSO_4 \cdot 7H_2O$, $MgCl_2 \cdot 4H_2O$ and $ZnSO_4 \cdot 7H_2O$ in 100 ml distilled water.

The plates were streaked with a freeze dried (lyophilised) sample of *Streptomyces avermitilis* (obtained from the American Type Culture Collection under no. ATCC 31267) and after 35 days were sub-culture onto the same medium to provide fresh colonies. After 13 days these colonies were cut from the plates and used to inoculate several replicates of a liquid medium (50 ml each in a 250 ml capacity Erlenmeyer flask) prepared by mixing together the following ingredients in the proportions stated and adjusting the pH to 7.4.

| | |
|---|---|
| Dextrose | 10.0 g |
| Peptone | 5.0 g |
| Yeast autolysate | 3.0 g |
| NaCl | 12.7 g |
| KCl | 0.72 g |
| $FeSO_4(NH_4)_2SO_4 \cdot 6H_2O$ | 0.035 g |
| $MgCl_2 \cdot 6H_2O$ | 5.32 g |
| $CaCl_2 \cdot 2H_2O$ | 0.73 g |
| Distilled water | 1000 ml |

The flasks were subjected to agitation using an orbital shaker at 220 revolutions per minute at 28°C for 7 days. The contents of five flasks were combined and subjected to centrifugation at 2,500 revolutions per minute at 5°C for ten minutes, which causes the mass of cells to separate out from the liquid medium which was removed by decantation. The residue consisted substantially of a pellet-like mass of living cells of *S. avermitilis*. The contents of three other groups of five flasks were similarly treated to give three further pellets.

4

Example 2

This illustrates the preparation of a composition according to the invention.

(a) The mass of cells obtained as a residue following the centrifugation process and decantation of the liquid medium as described in Example 1 was added to a solution of hydroxymethyl cellulose (0.2 g) in water (50 ml) at the ambient temperature (ca. 25°C) and agitated to disperse the cells throughout the composition, (hereinafter called "Composition A").

(b) Composition B was obtained by a similar process but using a 2% w/v suspension of pharmaceutical grade bentonite ("Bentopharm" B20—Registered Trade Mark) in place of the hydroxyethyl cellulose solution.

(c) Composition C was obtained similarly but using a 0.1% suspension of a polysacharride gum sold under the Registered Trade Mark 'Keltrol' by the Kelco Division of Merck and Co Inc.

(d) Composition D was obtained by suspending the pellet in 50 ml of distilled water.

Example 3

This example illustrates the control of insect and acarine pests of plants using the compositions of Example 2.

The tests were conducted using Compositions A, B, C and D at full strength and also diluted to 50% and 25% of their strength with a 0.05% aqueous solution of 'Tween' 80 (Registered Trade Mark) emulsifying agent.

(a) Test against *Plutella xylostella* (PX).

Freshly cut cabbage leaves were dipped into the composition under test and, after drying, infested with 10 third instar larval *Plutella xylostella*. Mortality was assessed after 3 days.

(b) Test against *Heliothis virescens* (HV)

Freshly cut cotton leaves were dipped into the compositions under test and, after drying, infested with 20—40 first instar larval *Heliothis virescens*. Mortality was assessed after 6 days.

(c) Test against *Tetranychus urticae* (TU).

French bean leaves were infested with adult *Tetranychus urticae* and 24 hours later the infested leaves were dipped in the composition under test. Mortality was assessed after 3 days.

The results are given in the following table as a mortality grading of 0—9 where

0 indicates up to 10% mortality
1 indicates from 11 to 20% mortality
2 indicates from 21 to 30% mortality
3 indicates from 31 to 40% mortality
4 indicates from 41 to 50% mortality
5 indicates from 51 to 60% mortality
6 indicates from 61 to 70% mortality
7 indicates from 71 to 80% mortality
8 indicates from 81 to 90% mortality
9 indicates from 91 to 100% mortality

| Composition | Strength % | Mortality grading | | |
|---|---|---|---|---|
| | | PX | HV | TU |
| A | 100 | 9 | 9 | 9 |
| A | 50 | 9 | 9 | 9 |
| A | 25 | 7 | 9 | 9 |
| B | 100 | 9 | 9 | 9 |
| B | 50 | 9 | 9 | 9 |
| B | 25 | 8 | 9 | 9 |
| C | 100 | 9 | 9 | 9 |
| C | 50 | 9 | 9 | 9 |
| C | 25 | 9 | 9 | 9 |
| D | 100 | 9 | 9 | 9 |
| D | 50 | 9 | 9 | 9 |
| D | 25 | 9 | 9 | 9 |

Example 4

This example further illustrates the insecticidal properties of the cultures. In the test, two cultures, A and B, were used. Culture A is *Streptomyces avermitilis* (ATCC 31267) and Culture B is the B41—146 strain of the *Streptomyces* species Bikokenkinki No. 1438. Both cultures were cultivated in the manner and quantity of Example 1. Several replicated cultivations were undertaken and the pellet of cells collected in each case had a wet weight in the range 9 to 11.5 g and a dry weight of 0.8 to 1.0g. The effect of various treatments and dilutions was investgated. The treatments were as follows:

Treatment No. 1

The pellet of cells was suspended in water (50 ml) and portions of the suspension were diluted to 0.5, 0.25, 0.125, 0.0625 and 0.0312 times the original concentration.

Treatment No. 2

The pellet of cells was suspended in water (50 ml) containing 0.1% of wetting agent sold under the name "Synperonic" NX ("Synperonic" is a Registered Trade Mark—"Synperonic" NX is a condensate of one mole of nonylphenol with about 8 moles of ethylene oxide). Thereafter portions were diluted as in Treatment No. 1.

Treatment No. 3

The pellet of cells were suspended in water (50 ml) containing 0.1% of "Synperonic" NX and subjected to sonication using an MSE (150 watt) ultrasonic disintegrator fitted with a sonic probe. Culture A was sonicated for 8 minutes on setting H4 and Culture B for 5 minutes on setting H4 followed by 2 minutes on setting H1. The cultures were cooled using an ice-jacket during the sonication process. (A microscopy check indicated cell disruption of the vegetative cells with release of the spores which were not themselves damaged. The viability of the spores was checked by placing a sample on an agar medium oatmeal (20.0g) agar (15.0g), distilled water (1 litre)—where the spores germinated to form colonies but the vegetative cells did not reproduce. Thereafter portions were diluted as in treatment No. 1.

Treatment No. 4

The pellet (11.1g) was subjected to freeze drying to a dry weight of 0.9g. (Samples showed reduced viability in an agar test). After suspending the dried cell mass in water (50 ml) containing 0.1% "Synperonic" NX portions were diluted as in treatment No. 1.

Treatment No. 5

Before centrifugation the broth was subjected to tyndallisation by heating the flasks at 65°C for 30 minutes on three consecutive days. In between the heat treatments the flasks were maintained at 28°C and shaken at 220 r.p.m. (After this treatment there was no growth on agar medium and the culture was therefore non-viable). Following collection of the cells by centrifugation the pellet was suspended in water (50 ml) containing 0.1% "Synperonic" NX and portions diluted as in Treatment No. 1.

Tests against insect and mites were carried out as described in Example 3 using the compositions prepared using the above treatments. In addition to the tests on *Heliothis, Tetranychus* and *Plutella* tests were also conducted on *Musca domestica* (houseflies), *Diabrotica balteata* (root worms) and aphids of the species *Aphis fabae* as follows:

(a) Test against *Aphis fabae* (AF)

The foliar parts of broad bean plants (ca. 5 cm high) infested three days earlier with adult *Aphis fabae* were dipped into the composition under test. The pots were kept on a sticky surfaced baseboard (to retain any aphids falling from the plants) at 20°C Mortality was assessed after 3 days.

(b) Test against *Musca domestica* (MD)

The flies (10 four day old adult per replicate) were direcly sprayed wisth the composition under test and kept at 25°C for 24 hours before mortality was assessed.

(c) Test against *Diabrotica balteata* (DB)

1.0 ml of the composition under test was pipetted onto a filter paper (9 cm diameter) in a petri dish on which was immediately placed a germinating corn seed and 10 larval *Diabrotica balteata* (ca. 3 mm length). The petri dish was covered and kept in a moist atmosphere for 3 days at 25°C after which the mortality of the pests were assessed.

The results of the tests are given in terms of percentage mortality of the pests in Tables A (for Culture A) and Table B (for Culture B). A dash (—) indicates no test was carried out for the pest concerned with the rate/treatment concerned.

TABLE A

| Treatment No. | Rate | % Mortality | | | | | |
|---|---|---|---|---|---|---|---|
| | | TU | AF | HV | PX | DB | MD |
| 1 | 0.0312 | 0 | 0 | 0 | 40 | 20 | — |
| | 0.0625 | 100 | 0 | 0 | 0 | 10 | — |
| | 0.125 | 100 | 0 | 0 | 60 | 0 | — |
| | 0.25 | 100 | 0 | 100 | 40 | 30 | — |
| | 0.5 | 90 | 0 | 100 | 50 | 0 | — |
| | 1.0 | 100 | 0 | 100 | 30 | 10 | — |
| 2 | 0.0312 | 90 | 100 | 0 | 80 | 0 | — |
| | 0.0625 | 90 | 100 | 0 | 30 | 0 | — |
| | 0.125 | 80 | 100 | 0 | 70 | 0 | — |
| | 0.25 | 90 | 100 | 0 | 30 | 0 | — |
| | 0.5 | 80 | 100 | 0 | 60 | 20 | — |
| | 1.0 | 90 | 100 | 100 | 40 | 10 | — |
| 3 | 0.0312 | 100 | 100 | 0 | 50 | 0 | 10 |
| | 0.0625 | 100 | 100 | 0 | 20 | 10 | 100 |
| | 0.125 | 100 | 100 | 100 | 20 | 30 | 100 |
| | 0.25 | 100 | 100 | 100 | 10 | 0 | 100 |
| | 0.5 | 90 | 100 | 100 | 30 | 10 | 100 |
| | 1.0 | 100 | 100 | 100 | 30 | 30 | — |
| 4 | 0.0312 | 100 | 100 | 100 | 100 | 100 | 0 |
| | 0.0625 | 100 | 100 | 100 | 100 | 100 | 0 |
| | 0.125 | 100 | 100 | 90 | 100 | 100 | 0 |
| | 0.25 | 100 | 100 | 90 | 100 | 100 | 0 |
| | 0.5 | 100 | 100 | 90 | 100 | 100 | 0 |
| | 1.0 | 100 | 100 | 100 | 100 | 100 | 100 |
| 5 | 0.0312 | 100 | 100 | 100 | 100 | 100 | 0 |
| | 0.0625 | 100 | 100 | 100 | 100 | 100 | 0 |
| | 0.125 | 100 | 100 | 100 | 100 | 100 | 80 |
| | 0.25 | 100 | 100 | 100 | 100 | 100 | 30 |
| | 0.5 | 100 | 100 | 100 | 100 | 100 | 90 |
| | 1.0 | 100 | 100 | 100 | 100 | 100 | 100 |

TABLE B

| Treatment No. | Rate | % Mortality | | | | |
|---|---|---|---|---|---|---|
| | | TU | AF | HV | PX | DB |
| 1 | 0.0312 | 100 | 0 | 0 | 30 | 10 |
| | 0.0625 | 80 | 0 | 0 | 80 | 20 |
| | 0.125 | 80 | 0 | 0 | 50 | 10 |
| | 0.25 | 90 | 0 | 0 | 30 | 20 |
| | 0.5 | 90 | 0 | 0 | 60 | 0 |
| | 1.0 | 100 | 0 | 100 | 20 | 60 |
| 2 | 0.0312 | 90 | 0 | 0 | 40 | 40 |
| | 0.0625 | 90 | 0 | 0 | 40 | 10 |
| | 0.125 | 100 | 0 | 0 | 30 | 10 |
| | 0.25 | 100 | 0 | 0 | 70 | 10 |
| | 0.5 | 90 | 0 | 100 | 30 | 20 |
| | 1.0 | 90 | 100 | 90 | 50 | 80 |
| 3 | 0.0312 | 100 | 100 | 0 | 60 | 10 |
| | 0.0625 | 100 | 100 | 100 | 30 | 40 |
| | 0.125 | 90 | 0 | 100 | 20 | 0 |
| | 0.25 | 90 | 0 | 90 | 0 | 10 |
| | 0.5 | 100 | 100 | 0 | 10 | 0 |
| | 1.0 | 90 | 0 | 0 | 20 | 20 |
| 4 | 0.0312 | 100 | 0 | 0 | 100 | 0 |
| | 0.0625 | 100 | 0 | 0 | 100 | 0 |
| | 0.125 | 100 | 0 | 0 | 100 | 0 |
| | 0.25 | 100 | 0 | 0 | 100 | 0 |
| | 0.5 | 100 | 0 | 0 | 100 | 0 |
| | 1.0 | 100 | 0 | 0 | 100 | 0 |
| 5 | 0.0312 | 90 | 0 | 0 | 100 | 0 |
| | 0.0625 | 100 | 0 | 0 | 100 | 0 |
| | 0.125 | 100 | 0 | 0 | 100 | 0 |
| | 0.25 | 100 | 0 | 0 | 100 | 0 |
| | 0.5 | 100 | 0 | 0 | 100 | 0 |
| | 1.0 | 100 | 0 | 0 | 100 | 0 |

The results in Tables A and B indicate that both Cultures A and B are extremely effective in combating *Tetranychs urticae* at the rates used and the method of treatment of the culture is not apparently very critical to achieving good control. However, freeze drying and tyndallisation improves the activity against lepidopterous pests such as Heliothis and Plutella for Culture A (but not apparently for Culture B) and against *Diabrotica* for both Cultures A and B. The inclusion of a wetting agent apparently improves the aphicidal activity of Culture A whereas sonication improves the activity against dipterous pests as exemplified by *Musca domestica* for Culture A.

Example 5

This example illustrates the method of controlling nematodes of the species *Meloidogyne incognita* by the use of a composition according to the invention.

Tomato seeds were treated with the composition A of Example 2 by suspending the seeds in the compositions and agitating for 20 minutes. The seeds were picked out of the composition with a coating of the composition still adhering to the seeds and planted immediately in trays of natural soil infested with nematodes of the species *Moloidogyne incognita*. A control was established using tomato seeds coated with the hydroxyethyl cellulose solution but without added *Streptomyces avermitilis* cells. There were fourteen replicates of the test and of the control. The trays were kept in a controlled environment and the plates incubated at 28°C for 14 days after which the plates were flooded with sterile Ringer's solution (quarter strength) and the spores removed from the plate into the liquid using a pipette tip. Aliquots (5.0 ml) of the liquid containing the spores were then used to inoculate two replicates of Medium C (each of 50 ml contained in a conical flask of capacity 250 ml) which were then subjected to agitation in an orbital shaker at 220 rpm at 28°C for 2 days. Aliquots (5 ml) were withdrawn from these flasks and used to inoculate 20 further replicates of Medium 4 (30 ml each) and these were then similarly agitated for a further 2 days after which the contents were used to inoculate Medium D (10 l) contained in a batch fermenter (capacity 14 l) fitted with a stirrer). Using a fermentation temperature of 28°C and passing air through the medium at a rate of 6 l/min whilst stirring with a shaft speed of 400 rpm the fermentation was continued for 5 days. The contents were then subjected to centrifugation at 3000 rpm at 5°C for 10 minutes to separate the mass of cells from the liquid medium which was removed by decantation to yield a pellet-like mass of living cells of the Streptomyces sp. (ICI reference A1001).

| Replicate No. | Invention composition | | Control | |
|---|---|---|---|---|
| | Number of root knots | Number of egg masses | Number of root knots | Number of egg masses |
| 1 | 0 | 0 | 73 | 3 |
| 2 | 0 | 0 | 34 | 7 |
| 3 | 0 | 0 | 68 | 18 |
| 4 | 0 | 0 | 29 | 7 |
| 5 | 0 | 0 | 24 | 3 |
| 6 | 0 | 0 | 35 | 2 |
| 7 | 0 | 0 | 41 | 12 |
| 8 | 0 | 0 | 14 | 0 |
| 9 | 0 | 0 | 14 | 2 |
| 10 | 0 | 0 | 34 | 3 |
| 11 | 2 | 1 | 29 | 4 |
| 12 | 0 | 0 | 28 | 3 |
| 13 | 0 | 0 | 60 | 0 |
| 14 | 0 | 0 | 57 | 2 |
| Total | 2 | 1 | 545 | 66 |
| Average per plant | 0.14 | 0.07 | 38.93 | 4.71 |

Percentage reduction afforded by the invention composition

    (a) in root knots—99.64%
    (b) in egg masses—98.51%

Example 6

In this Example which describes two further methods of culturing *Streptomyces* useful in the invention the nutrient media used are referred to as A, B, C and D. Their composition is as set out in the following Table.

| Ingredient** | Medium | | | |
|---|---|---|---|---|
| | A | B | C | D |
| Oatmeal* | 20.0 | | | |
| Dextrose | | | 10.0 | 20.0 |
| Peptone | | | 5.0 | 5.0 |
| Yeast autolysate | | | 3.0 | 3.0 |
| NaCl | | | 12.7 | 12.7 |
| KCl | | | 0.72 | 0.72 |
| $FeSO_4 \cdot 7H_2O$ | 0.001 | | | |
| $MgCl_24H_2O$ | 0.001 | | | |
| $ZnSO_4 \cdot 7H_2O$ | 0.001 | | | |
| $MgCl_2 \cdot 6H_2O$ | | | 5.32 | 5.32 |
| $CaCl_2 \cdot 2H_2O$ | | | 0.73 | 0.73 |
| $FeSO_4(NH_4)_2SO_4 \cdot 6H_2O$ | | | 0.035 | 0.35 |
| "Bacto-agar" | 18.0 | | | |
| "Bacto-tryptone" | | 5.0 | | |
| "Bacto-yeast extract" | | 30.0 | | |
| Distilled water | 1000 ml | 1000 ml | 1000 ml | 1000 ml |
| pH range | | 7.0—7.2 | 7.4 | 7.4 |

*The oatmeal was steamed in distilled water (1000 ml) for 20 minutes, filtered through cheese-cloth and the volume adjusted to 1000 ml with distilled water before addition of the other ingredients.
**All quantities in grams unless otherwise indicated.

("Bacto-agar", "Bacto-tryptone" and "Bacto-yeast extract" are registered trade marks referring to the brand of agar, tryptone and yeast extract sold by Difco Laboratories Inc., Detroit, Michigan, USA).

(a) 50 ml of Medium B contained in a conical flask (capacity 250 ml) was inoculated with a sample of freeze-dried (lyophilised) culture of a *Streptomyces* species (ICI reference A1001). The flask was subjected to agitation using an orbital shaker at 220 rpm at 28°C for 5 days at which time 5.0 ml aliquots were withdrawn and used to inoculate several replicates of Medium C (each of 50 ml contained a conical flask of capacity 250 ml). After agitation at 220 rpm at 28°C for 2 days (and also over the next 3 days) aliquots of 5.0 ml were withdrawn and used to inoculate further similar replicates of Medium C. These replicates were then used in similar fashion after a further 2 days agitation to inoculate a yet further batch of replicates this time using Medium D (each of 50 ml). After agitation of this last group of flasks for 7 days at 28°C the contents were combined and subjected to centrifugation at 3000 rpm at 5°C for a period of 10 minutes, which caused the mass of cells to separate from the liquid medium. After decantation of the liquid medium the residue consisted of a pellet-like mass of living cells of *Streptomyces* sp. (ICI reference A1001).

(b) Agar plates prepared from Medium A were inoculated with a freeze-dried (lyophilised) sample of *Streptomyces* sp. (ICI reference A1001).

10

# 0 102 702

Example 7

The mass of cells obtained by the method set out in Example 6 (b) above was divided into two portions. One portion (A) was subjected to freeze-drying using a Chemlab instruments Freeze Drier at −30°C at 1 atmosphere to remove the water, leaving a finely divided powdery product. The other portion (b) was made up to a 5% w/v slurry with distilled water, homogenised using a "Waring" Blender and then subjected to spray drying with "Niro" mobile laboratory spray drier using an inlet temperature of 180°C and outlet temperature of 100°C to yield the product in a finely divided powdery form.

To assess the affect of the different drying conditions on the biological activity, samples of the materials obtained by the two methods were bioassayed to determine their insecticidal activity according to the method set out in Example 5.

Both samples A and B were equally effective when used against red spider mite (*Tetranychus urticae*), aphids (*Aphis fabae*), houseflies (*Musca domestica*) and diamond back moth larvae (*Plutella xylostella*).

Example 8

This example illustrates a composition according to the invention in the form of a wettable powder which is prepared by mixing the listed ingredients in the proportions stated.

|  | % w/w |
| --- | --- |
| Freeze dried cell mass (A from example 7) | 40.0 |
| Sodium lignosulphonate | 5.0 |
| Sodium lauryl sulphate | 3.0 |
| China clay (kaolinite) | to 100.0 |

Example 9

This Example illustrates a composition according to the invention in the form of an aqueous suspension.

|  | % w/w |
| --- | --- |
| Spray dried cell mass (B from Example 7) | 5.0 |
| Sodium lignosulphonate | 2.0 |
| Nonylphenol ethoxylate | 1.0 |
| Hydroxyethyl cellulose | 0.5 |
| Water | to 100.0 |

Example 10

By the use of the procedure set forth in Example 6(a) but starting from a freeze dried (lyophilised) sample of *Streptomyces* sp. (ICI reference A1002) there was obtained a pellet-like mass of cells of this organism. After freeze-drying in the manner set forth in Example 7 the dry powdery material was bioassayed in the way described in Example 3 and showed insecticidal activity against *Aphis fabae* and *Plutella xylostella* and acaricidal activity against *Tetranychus urticae*.

## Claims

1. A method of controlling insect, acarine or nematode pests of plants which comprises applying to the pests or to the locus of the pests an insecticidally, acaricidally or nematicidally effective amount of a composition comprising a culture of a micro-organism of the genus *Streptomyces* characterised in that the species and strain of *Streptomyces* is selected from those species and strains which when cultivated under appropriate conditions are capable of producing an insecticidally, acaricidally or nematicidally active C-076 or B-41 type macrocyclic antibiotic substance.

2. The method according to claim 1 in which the microorganism is *Streptomyces avermitilis* ATCC 31267 or a mutant thereof.

3. The method according to claim 1 in which the microorganism is the B41—146 strain of the *Streptomyces* species NRRL 5739 or a mutant thereof.

4. The method according to claim 1 in which the culture of the micro-organism has been subjected to freeze drying, spray drying, sonication or tyndallisation prior to application to the pests or the locus of the pests.

11

5. The method of claim 1 wherein the culture is applied to the foliar parts of plants.

6. The method of claim 1 wherein the culture is applied to seeds prior to planting.

7. An insecticidal, acaricidal or nematicidal composition which comprises an insecticidally, acaricidally or nematicidally effective number of culture of micro-organisms of the genus *Streptomyces* as defined in claim 1 in association with an inert carrier or diluent and optionally a surface active agent, said inert diluent or carrier, being in the form of a liquid, a paste or a jelly, or is a particulate powdery or granular carrier.

8. A composition according to claim 7 in the form of a wettable powder or an aqueous suspension suitable for spray application after dilution with water.

9. A process for preparing a composition as defined in claim 7 in which (a) the culture is collected from the cultivation medium and subjected to freeze drying or spray drying and thereafter admixed with a liquid or solid diluent or carrier, or (b) the culture is collected from the cultivation medium and dispersed in a liquid phase and subjected to sonication and optionally thereafter admixed with a diluent or carrier, or (c) the culture in the culture medium is subjected to tyndallisation prior to collection, is collected and admixed with a liquid or solid diluent or carrier.

**Patentansprüche**

1. Verfahren zur Bekämpfung von Insecten-, Acariden-oder Nematoden-Schädlingen an Pflanzen, bei welchem auf die Schädlinge oder auf den Aufenthaltsort der Schädlinge eine insecticid, acaricid oder nematicid wirksame Menge einer Zusammensetzung aufgebracht wird, die einen Kultur eines Mikroorganisms der Gattung Streptomyces enthält, dadurch gekennzeichnet, daß die Art und der Stamm von Streptomyces von solchen Arten und Stämmen ausgewählt wird, die bei Kultivierung unter entsprechenden Bedingungen dazu fähig sind, eine insecticid, acaricid oder nematicid wirksame macrocyclische antibiotische Substanz vom Typ C-076 oder B-41 zu bilden.

2. Verfahren nach Anspruch 1, bei welchem der Mikro-organismus Streptomyces avermitilis ATCC 31267 oder ein Mutant davon ist.

3. Verfahren nach Anspruch 1, bei welchem der Mikro-organismus der B41—146-Stamm der Streptomyces-Art NRRL 5739 oder ein Mutant davon ist.

4. Verfahren nach Anspruch 1, bei welchem die Kultur des Mikroorganismus vor dem Aufbringen auf die Schädlinge oder auf den Aufenthaltsort der Schädlinge einer Gefriertrocknung, Spritztrocknung, Beschallung oder Tyndallisierung unterworfen worden ist.

5. Verfahren nach Anspruch 1, bei welchem die Kultur auf die Blatteile der Pflanzen aufgebracht wird.

6. Verfahren nach Anspruch 1, bei welchem die Kultur vor dem Säen auf die Samen aufgebracht wird.

7. Insecticide, acaricide oder nematicide Zusammensetzung, welche ein insecticid, acaricid oder nematicid wirksame Menge einer Kultur eines Mikroorganismus der Gattung Streptomyces gemäß Definition nach Anspruch 1 gemeinsam mit einem inerten Träger- oder Verdünngs-mittel und gegebenenfalls einen oberflächenaktiven Mittel enthält, wobei das inerte Verdünnungs- oder Trägermittel die Form einer Flüssigkeit, einer Paste oder einer Gallerte aufweist oder ein teilchenförmiger pulvriger oder granularer Träger ist.

8. Zusammensetzung nach Anspruch 7 in Form eines benetzbaren Pulvers oder einer wäßrigen Suspension, die sich nach Verdünnung mit Wasser für eine Spritzanwendung eignet.

9. Verfahren zur Herstellung einer Zusammensetzung nach Anspruch 7, bei welchem (a) die Kultur aus dem Kultur-medium abgetrennt und einer Gefriertrocknung oder Spritztrocknung unterworfen und hierauf mit einem flüssigen oder festen Verdünnungs- oder Trägermittel gemischt wird oder (b) die Kultur vom Kulturmedium abgetrennt und in einer flüssigen Phase dispergiert und einer Beschallung unterworfen und hierauf gegebenenfalls mit einem Verdünnungs-oder Trägermittel gemischt wird oder (c) die Kultur im Kulturmedium vor der Abtrennung einer Tyndallisierung unterworfen, abgetrennt und mit einem flüssigen oder festen Verdünnungs- oder Trägermittel gemischt wird.

**Revendications**

1. Procédé pour combattre des insectes acariens ou nématodes parasites de plantes, qui consiste à appliquer aux parasites ou à leur milieu une quantité à effet insecticide, acaricide ou nématicide d'une composition comprenant une culture d'un micro-organisme du genre *Streptomyces*, caractérisé en ce que l'espèce et la souche de *Streptomyces* sont choisies parmi les espèces et souches qui, lorsqu'elles sont cultivées dans des conditions appropriées, sont capables d'élaborer une substance antibiotique macrocyclique de type C-076 ou B-41 douée d'activité insecticide, acaricide ou nématicide.

2. Procédé suivant la revendication 1, dans lequel le micro-organisme est *Streptomyces avermitilis* ATCC 31267 ou un mutant de cette espèce.

3. Procédé suivant la revendication 1, dans lequel le micro-organisme est la souche B41—146 de l'espèce NRRL 5739 de *Streptomyces* ou un mutant de cette espèce.

4. Procédé suivant la revendication 1, dans lequel la culture du micro-organisme a été soumise à une lyophilisation, un séchage par pulvérisation, un traitement aux ultrasons ou une tyndallisation avant son application aux parasites ou à leur milieu.

**0 102 702**

5. Procédé suivant la revendication 1, dans lequel la culture est appliquée aux parties foliaires de plantes.

6. Procédé suivant la revendication 1, dans lequel la culture est appliquée à des semences ayant les semis.

7. Composition insecticide, acaricide ou nématicide, qui comprend un numéro de culture efficace du point de vue insecticide, acaricide ou nématicide de micro-organismes du genre *Streptomyces* tel que défini dans la revendication 1, en association avec un support ou diluant inerte, et facultativement un agent tension-actif, le diluant ou supporte inerte étant sous la forme d'un liquide, d'une pâte ou d'une gelée, ou étant un support particulaire en poudre ou en grains.

8. Composition suivant la revendication 7, sous la forme d'une poudre mouillable ou d'une suspension aqueuse qui convient à l'application par pulvérisation après dilution avec de l'eau.

9. Procédé de préparation d'une composition telle que définie dans la revendication 7, dans lequel (a) la culture est recueillie dans un milieu de culture et soumise à une lyophilisation ou à un séchage par pulvérisation, puis mélangée avec un diluant ou support liquide ou solide, ou bien (b) la culture est recueillie dans le milieu de culture et dispersée dans une phase liquide et soumise à un traitement par les ultrasons, puis facultativement mélangée avec un diluant ou support, ou bien (c) la culture dans le milieu de culture est soumise à une tyndallisation avant d'être recueillie, puis elle est recueillie et mélangée avec un diluant ou support liquide ou solide.

13